# EUROPÄISCHE PATENTSCHRIFT

(11) **EP 1 132 241 B1**
(45) Veröffentlichungstag und Bekanntmachung des Hinweises auf die Patenterteilung: **28.02.2007**
(21) Anmeldenummer: 01101766.2
(22) Anmeldetag: 26.01.2001
(51) Int. Cl.: B60J 7/20

(54) **Cabriolet-Fahrzeug mit einem unterhalb eines Verdeckkastendeckels ablegbaren Verdeck**
Convertible vehicle with a foldable top storable underneath a cover panel of a foldable top compartment
Véhicule convertible équipé avec un toit pliant escamotable au-dessous d'un panneau de couverture d'un compartiment de stockage pour toit pliant

(30) Priorität: 10.03.2000 DE 20004535 U
(43) Veröffentlichungstag der Anmeldung: 12.09.2001
(73) Patentinhaber: Wilhelm Karmann GmbH, 49084 Osnabrück (DE)
(72) Erfinder: Plassmeyer, Jörg, 49196 Bad Laer (DE)
(74) Vertreter: Pott, Ulrich

(56) Entgegenhaltungen:
- EP-A- 0 949 102
- DE-C- 19 801 853
- DE-C- 19 803 155

## Beschreibung

Die Erfindung betrifft ein Cabriolet-Fahrzeug mit einem unterhalb eines Verdeckkastendeckels ablegbaren Verdeck, wobei der Verdeckkastendeckel bei Öffnung einen spitzen Winkel mit der Fahrtrichtung einschließt in einer Ausbildung nach dem Oberbegriff des Anspruchs 1.

Es ist bekannt, als Antriebsorgan zur Öffnung eines derartigen Verdeckkastendeckels einen oder mehrere Hydraulikzylinder vorzusehen, die zylinderseitig schwenkbar an der Karosserie und kolbenstangenseitig ebenfalls schwenkbar am Verdeckkastendeckel gelagert sind.

Bei Öffnung des Verdeckkastendeckels wird der jeweilige Hydraulikzylinder mit aufwärts verschwenkt, was hinsichtlich der Hydraulikleitungen insofern problematisch ist, als diese mitbewegt werden und sich insbesondere beim Schließen des Verdeckkastendeckels Knickstellen in den Hydraulikleitungen bilden können. Die Herstellungskosten sind durch die benötigte großen Leitungslängen erhöht.

Aus der EP 0 959 212 A1 ist eine Hydraulikzylinderanordnung bekannt, die im wesentlichen karosseriefest gelagert ist. Diese Anordnung ist allerdings nur geeignet, ein Viergelenk aufzustellen, da sie gelenkseitig über einen gebogenen Hebel an einem Außenhebel des Viergelenks angreift und auf diesen zum Öffnen eine Schubkraft ausübt. Für ein reines Schwenklager, das bei Verdeckkastendeckeln in aller Regel nur erforderlich und aus Kostengründen einem Viergelenk vorzuziehen ist, ist eine derartige Anordnung nicht verwendbar. Aufgrund des gebogenen Hebels ist zudem ein erheblicher Raumbedarf der genannten Anordnung gegeben.

Aus der DE 198 93 155 C1 ist ein Cabriolet-Fahrzeug der eingangs genannten Art bekannt, bei dem ein karosseriefest abgestützter Hydraulikzylinder über eine gelenkig abgestützte Stange mit dem in Fahrtrichtung vorderen Ende eines Kofferraum- bzw. Verdeckkastendeckels verbunden ist. Zum Aufschwenken des Verdeckkastendeckels ist der Hydraulikzylinder um seine Lagerstelle zu verschwenken. Diese Schwenkbewegungen haben die entsprechende Hydraulikleitungen mit zu machen mit der Gefahr des sich Einstellens von Knickstellen. Die Leitungslängen der Hydraulikzylinder sind auf diese Schwenkbewegungen abzustimmen.

Aus der EP 0 949 102 A1 ist ein Cabriolet-Fahrzeug bekannt, dessen Verdeckkastendeckel auch wiederum über einen schwenkbeweglichen Hydraulikzylinder in seine Offen- und Schließstellung zu überführen ist. Dabei haftet dieser Lösung der gleiche Nachteil an wie der Gestaltung eines Cabriolet-Fahrzeugs nach der vorgenannten DE 198 03 155 C1.

Aus der DE 198 01 853 C1 ist ein Cabriolet-Fahrzeug bekannt, bei der mehrere Hydraulikzylinder und Gestängeeinheiten vorgesehen sind, um den Verdeckkastendekkel in seine Öffnungs- und in seine Schließstellung zu überführen. Dies soll über eine zentrale Schwenkstange erfolgen, an der einseitig die Hydraulikzylinder und die Schwenkgestängestangen angreifen. Der dazu notwendige bauliche Aufwand ist erheblich. Auch hier sind wiederum Hydraulikzylindereinheiten vorgesehen, die in entsprechende verschiedene Schwenkpositionen zu überführen sind. Neben dem erheblichen baulichen Aufwand sind somit auch hier die Nachteile der entsprechenden Dimensionierung und der längenmäßigen Auslegung der Hydraulikleitungen mit der Gefahr von Knickstellen gegeben.

Der Erfindung liegt das Problem zugrunde, ein Cabriolet-Fahrzeug zu schaffen, das einen verbesserten Öffnungsmechanismus für einen Verdeckkastendeckel aufweist.

Die Erfindung löst dieses Problem mit den Merkmalen des Anspruchs 1. Vorteilhafte Ausgestaltungen sind in den Ansprüchen 2 bis 6 angegeben.

Durch die Anordnung eines Gestänges zwischen dem Antriebsorgan und der Verbindung dieses Gestänges mit einem Bereich des Verdeckkastendeckels außerhalb des Schwenklagers, der in Fahrtrichtung dem Schwenklager vorgeordnet ist, läßt sich zunächst schon ein sehr guter Hebelarm zum Öffnen des Verdeckkastendekkels nutzen.

Aufgrund der in im wesentlichen gleicher Lage an der Karosserie gehaltenen Anordnung des Antriebsorganes sowohl während des Einfahrens als auch während des Ausfahrens der Kolbenstange kann dieses innerhalb der Karosserie, beispielsweise hinter Verkleidungsteilen, geschützt angeordnet sein, ohne daß die Zuleitungen eine nennenswerte Bewegung ausführen müssen. Diese können daher ohne Übermaß hinsichtlich ihrer Länge und ohne Materialverstärkungen ausgeführt sein. Wenn ein in Fahrzeuglängsrichtung ein- und ausführbarer Hydraulikzylinder Verwendung findet, ist eine sehr platzsparende und hinsichtlich der Gestehungskosten günstige Lösung erreicht.

Das Gestänge ist mit einem Hebel versehen, der sich von einem karosserieseitigen festen Lager in Richtung der Kolbenstange des Antrieborganes erstreckt, wodurch das eingeleitete Drehmoment zum Ausschwenken des Gestänges vergrößert wird, ohne daß die Antriebsleistung des Antriebsorgans vergrößert werden müßte. Bei der Verwendung des Hydraulikzylinders kann dadurch das Ölvolumen im Zylinder gering gehalten werden, wobei nur ein kurzer Hubweg erforderlich ist.

Die im wesentlichen gleiche Lage während einer Ein- und Ausfahrbewegung der Kolbenstange in Verbindung mit der Halterung des Antriebsorgans an einem ortsfesten Schwenklager des Gestänges mit einem Hebelarm führt dazu, daß das Antriebsorgan in seiner liegenden Anordnung noch begrenzte bzw. kleine Schwenkbewegungen durchmachen kann, die durch das Maß des Hebelarms zu beeinflussen sind. Das kann auch dazu führen, daß sich das Antriebsorgan bei geschlossenem Verdeckkastendeckel in ausgefahrener Position befindet oder eine karosseriefeste Anlenkung einem Angriffspunkt einer Kolbenstange des Antriebsorgans in Fahrtrichtung vorgeordnet ist.

Besonders vorteilhaft ist das Gestänge mit einem Zwischengelenk versehen, wodurch im eingefalteten Zustand der Raumbedarf des Gestänges minimiert ist. Dieses kann parallel zu beispielsweise einem Hydraulikzylinder eingefaltet liegen und in etwa die gleiche Längserstreckung wie der Hydraulikzylinder aufweisen. Es verbleibt dann eine maximale Nutzungsmöglichkeit des Kofferraums und insbesondere des Verdeckaufnahmeraums.

Weitere Vorteile und Einzelheiten ergeben sich aus einem in der Zeichnung dargestellten Ausführungsbeispiel des Gegenstandes der Erfindung. In der Zeichnung zeigt:
- Fig. 1: eine perspektivische Ansicht eines erfindungsgemäßen Cabriolet-Fahrzeugs,
- Fig. 2: den Heckbereich eines derartigen Cabriolet-Fahrzeugs in schematischer Draufsicht bei geöffnetem Verdeck,
- Fig. 3: einen Schnitt etwa entlang der Linie III-III in Fig. 2,
- Fig. 4: eine ähnliche Darstellung wie Fig. 3 bei geöffnetem Verdeckkastendeckel,
- Fig. 5: eine perspektivische schematisierte Gesamtansicht des Heckbereichs eines erfindungsgemäßen Cabriolet-Fahrzeugs bei geöffnetem Verdeckkastendeckel,
- Fig. 6: eine ähnliche Ansicht wie Fig. 3 einer Vorrichtung gemäß bisherigem Stand der Technik,
- Fig. 7: eine ähnliche Ansicht wie Fig. 4 eines alternativen Ausführungsbeispiels,
- Fig. 8: eine ähnliche Ansicht wie Fig. 3 des alternativen Ausführungsbeispiels.

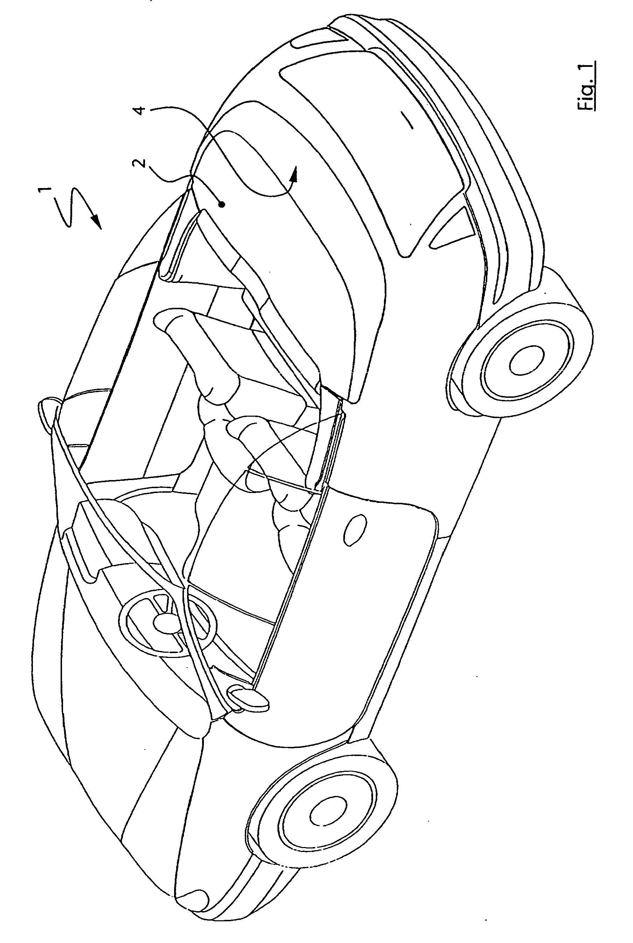

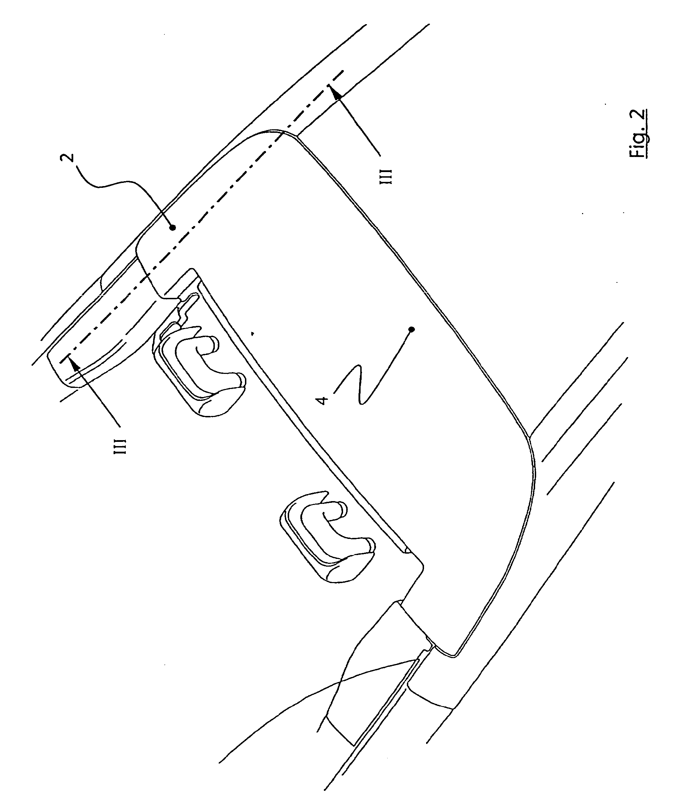

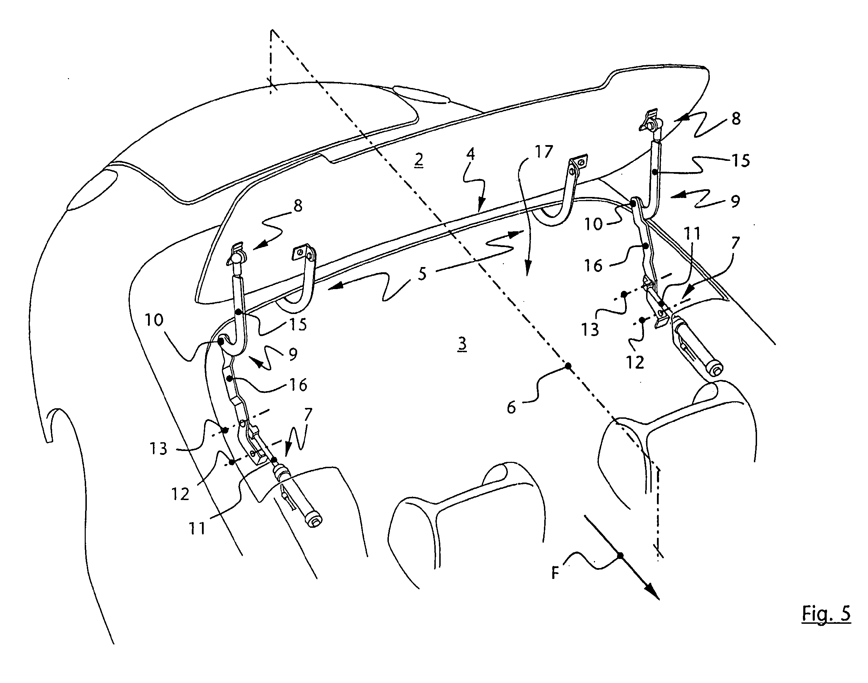

Das Cabriolet-Fahrzeug 1 gemäß dem ersten Ausführungsbeispiel (Fig. 1 - Fig. 5) weist einen starren Verdeckkastendeckel 2 auf, der zur Abdeckung eines Verdeckaufnahmeraums 3 vorgesehen ist. Der Verdeckkastendeckel 2 kann beispielsweise aus Kunststoff oder auch metallischen Blechen, eventuell im Verbund mit Schaumwerkstoffen, bestehen. An seinem rückseitigen Bereich 4 ist der Verdeckkastendeckel 2 über ein Schwenklager 5 an der Fahrzeugkarosserie festgelegt. Das Schwenklager 5 kann, wie in Fig. 5 dargestellt, beispielsweise zwei schwanenhalsartige Scharnierteile umfassen. Auch andere Ausbildungen einer Schwenklagerung sind möglich, etwa ein in einer Fahrzeuglängsmittelebene 6 liegendes Einzelscharnier oder mehrere über die Fahrzeugbreite verteilte Scharnierteile.

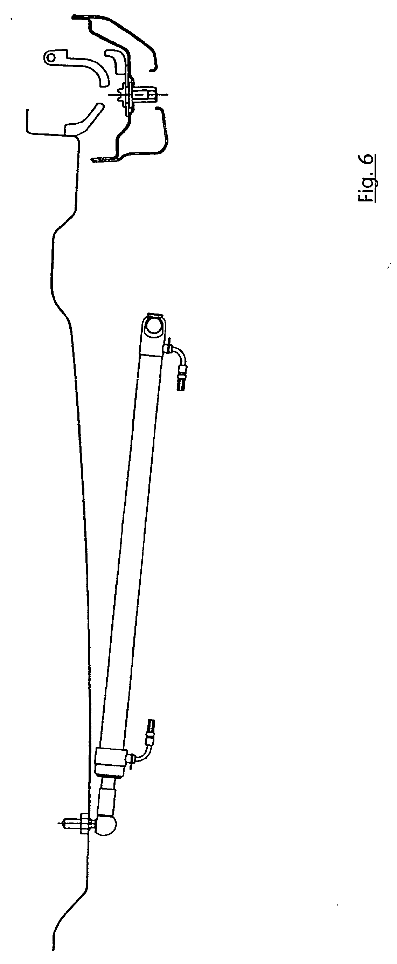

Zum Aufschwenken des an seinem rückwärtigen Bereich 4 angeschlagenen Verdeckkastendeckel 2 sind im Ausführungsbeispiel zwei seitliche Antriebsorgane 7 vorgesehen, die an einem abseits des Schwenklagers 5 gelegenen und diesem bei geschlossenem Verdeckkastendeckel 2 in Fahrtrichtung F vorgeordneten Bereich 8 angreifen. Durch die Beabstandung des Angriffspunktes 8a gegenüber dem Schwenklager 5 ergibt sich ein sehr günstiger Hebelarm, so daß nur ein geringer Kraftaufwand zum Öffnen des Verdeckkastendeckels 2 erforderlich ist. Bisher war hierfür ein Hydraulikzylinder oder dergleichen gemäß Fig. 6 vorgesehen, der lediglich an einem Ende karosseriefest gehalten war und mit dem Verdeckkastendeckel 2 aufschwenkte. Dadurch war ein Hydraulikzylinder mit einem sehr großen Hubweg und einem entsprechend großen Ölvolumen - auch für die mitbewegten Zuleitungen - erforderlich. Zudem ist der Raumbedarf einer derartigen Anordnung erheblich.

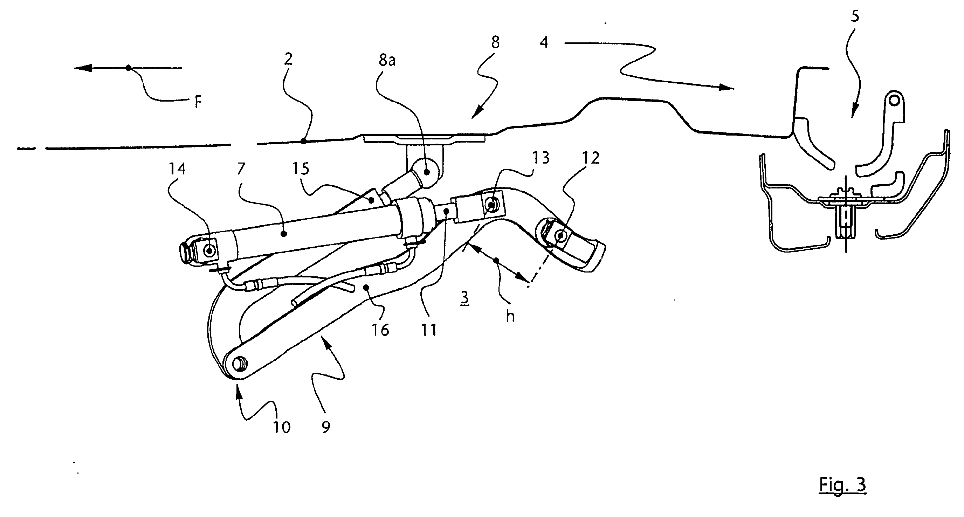

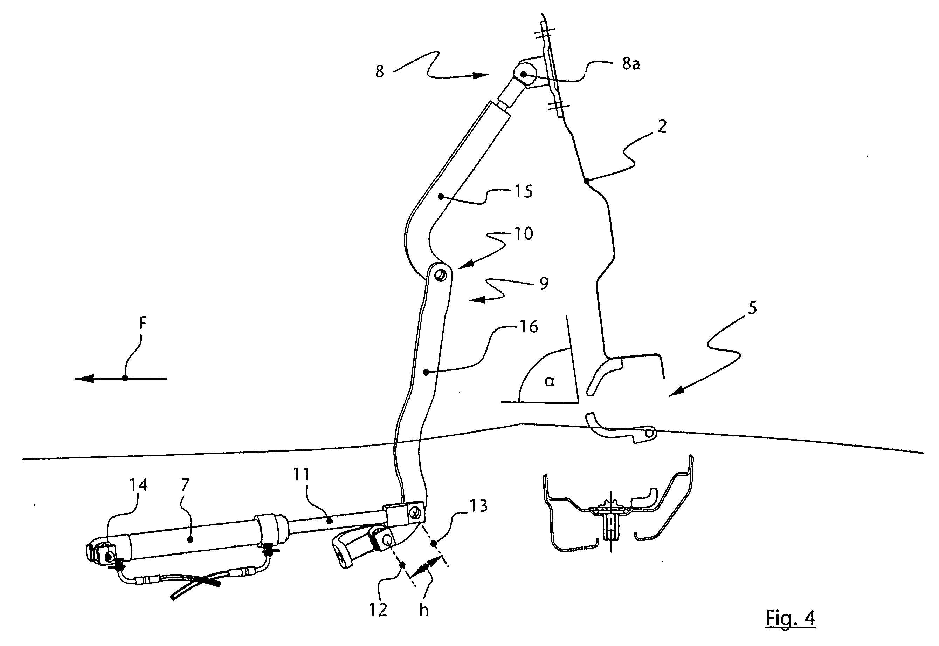

Gemäß dem vorliegenden Ausführungsbeispiel ist das Antriebsorgan 7 insgesamt im wesentlichen karosseriefest gehalten und muß lediglich mit seinem kolbenstangenseitigen Ende eine leichte Schwenkbewegung von wenigen Grad vollführen können. Zur Kraftvermittlung zwischen der Kolbenstange 11 und dem Angriffspunkt 8a an dem Verdeckkastendeckel 2 ist ein etwa mittig mit einem Gelenk 10 versehenes Gestänge 9 vorgesehen. Das Gestänge 9 ist insgesamt an einer Drehachse 12 karosseriefest gehalten. Beabstandet zu der Drehachse 12 liegt die Angriffsachse 13 der Kolbenstange 11 an dem Gestänge 9, mittels der das Auf- oder Zuschwenken des Verdeckkastendeckels 2 bewirkbar ist. Durch den Abstand der Angriffsachse 13 gegenüber der karosseriefesten Schwenkachse 12 des Gestänges 9 ergibt sich ein Hebel h für das Antriebsorgan 7. Die Hydraulikzylinder 7 sind zumindest einenends über eine karosseriefeste Halterung 14 an dem Cabriolet-Fahrzeug 1 festgelegt. In eingefahrener Stellung (Fig. 3) der Hydraulikzylinder 7 ist das Gelenk 10 des Gestänges 9 eingefaltet, so daß die beiden Gestängeteile 15,16 parallel zueinander und nahezu parallel zum Antriebsorgan 7 seitlich der Durchtrittsöffnung 17 für das Verdeck gehalten sind. Dadurch ergibt sich eine sehr platzsparende Anordnung. Die Längserstreckung der Gestängeteile 15 und 16 ist dabei nur unwesentlich größer als die Längserstreckung des Antriebsorgans 7, was zur effektiven Raumausnutzung beiträgt. Das Zwischengelenk 10 wird durch Ausfahren der Kolbenstange 11 zwangsweise auseinandergefaltet (Fig. 3 zu Fig. 4), so daß sich die in Fig. 4 gezeigte Offenstellung mit nahezu parallel ausgerichteten Gestängeteilen 15,16 ergibt.

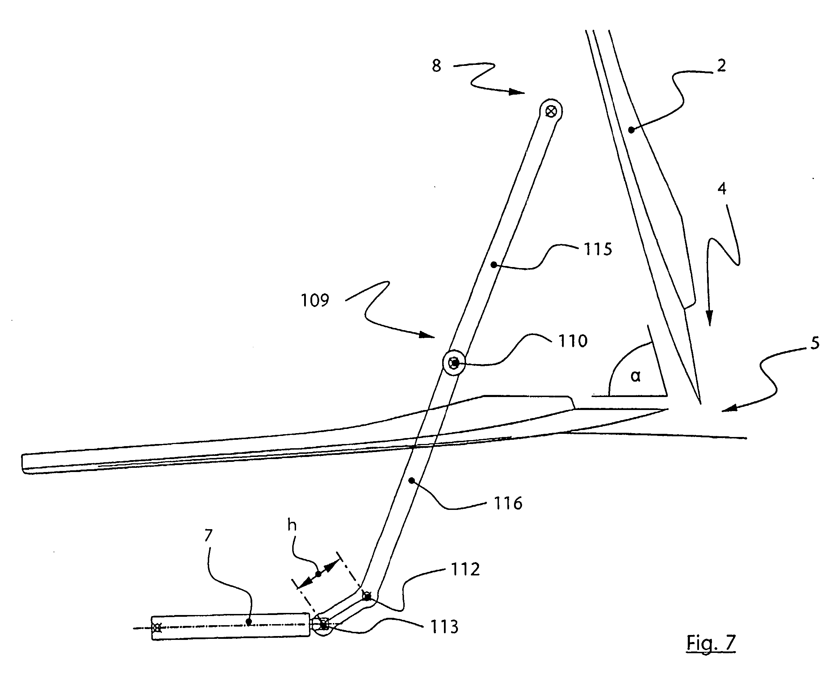

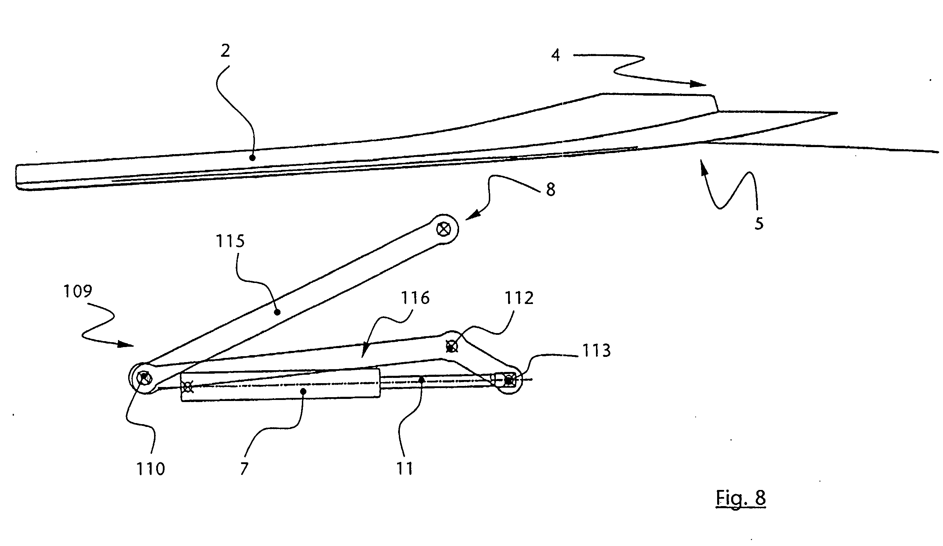

In einem zweiten Ausführungsbeispiel (Fig. 7, 8) befindet sich bei geschlossenem Verdeckkastendeckel 2 (Fig. 8) der Hydraulikzylinder 7 in ausgefahrener Position, da die karosseriefeste Anlenkung 112 dem Angriffspunkt 113 der Kolbenstange 11 in Fahrtrichtung F vorgeordnet ist. Zum Öffnen des Verdeckkastendeckels 2 wird dann der Kolben 7 eingefahren und damit eine Zugkraft auf die Anlenkachse 113 ausgeübt, die zu einem Drehmoment um die karosseriefeste Schwenkachse 112 führt. Mithin wird das untere Gestängeteil 116 aufwärts geschwenkt. Da die Anlenkung 8a an dem Verdeckkastendeckel 2 ortsfest ist, erfolgt ein zwangsweises Auseinanderfalten des Zwischengelenks 110 und somit auch eine Aufstellung des oberen Gestängeteils 115. Auch in diesem Ausführungsbeispiel ist die Kolbenstange 11 in Fahrzeuglängsrichtung ein- und ausfahrbar. Die raumsparende Anordnung (Fig. 8) der Gestängeteile 115,116 und der geringe Hubweg des Hydraulikzylinders 7 sind auch hier verwirklicht.

Das Ölvolumen ist durch den kurzen Hubweg und die unbewegten, ohne Übermaß ausgeführten Zuleitungen gering. Gleichzeitig ist der Angriffspunkt 8 auch gegenüber dem Schwenklager 5 beabstandet, woraus sich ein günstiger Hebelarm ergibt, so daß auch die erforderliche Kraft zum Öffnen des Verdeckkastendeckels 2 gering ist.

Mit einer kugelgelenkigen Ausbildung der Lagerungen 12,112 des Gestänges 9,109 an der Karosserie sowie 8a des Gestänges 9,109 an dem Verdeckkastendeckel 2 lassen sich auch Bewegungen ermöglichen, bei denen die Gestängeteile 15,16;115,116 eine dreidimensionale Bewegungsbahn beschreiben und neben der reinen Schwenkbewegung auch eine Bewegungskomponente quer zum Fahrzeug aufweisen. Dieses kann unter engen räumlichen Verhältnissen in der abgelegten Stellung zu einer besonders günstigen Bewegung führen.

Die Gestängeteile 15,16 bzw. 115,116 können während ihrer Öffnung einen Totpunkt überschreiten, so daß sie in Öffnungsstellung des Verdeckkastendeckels 2 (Fig. 4, Fig. 7) an einem Anschlag gegeneinander verspannt sind und durch die Übertotpunktlage in der geöffneten Stellung auch ohne Krafteinleitung durch das Antriebsorgan 7 verbleiben. Dieses kann dann drucklos geschaltet sein.

## Patentansprüche

1. Cabriolet-Fahrzeug (1) mit einem unterhalb eines Verdeckkastendeckels (2) ablegbaren Verdeck, wobei der Verdeckkastendeckel (2) bei Öffnung einen spitzen Winkel (α) mit der Fahrtrichtung (F) einschließt und zur Unterstützung der Öffnungsbewegung zumindest ein ortsfest an der Karosserie abgestütztes, eine ein- und ausfahrbare Kolbenstange aufweisendes Antriebsorgan vorgesehen ist, das über die Kolbenstange an dem Verdeckkastendeckel außerhalb eines Schwenklagers (5) vorzugsweise in einem diesem in Fahrtrichtung vorgeordneten Bereich (8) des Verdeckkastendeckels (2) über ein Gestänge (9;109) angreift, **dadurch gekennzeichnet, daß** das Antriebsorgan (7) während einer Ein- und Ausfahrbewegung der Kolbenstange in einer im wesentlichen gleichen Lage an der Fahrzeugkarosserie gehalten, zur Kraftübertragung der Kraft des Antriebsorgans (7) das Gestänge (9;109) an einem karosseriefesten Lager (12;112) abgestützt und von diesem Lager (12;112) ausgehend ein Hebelarm (H) vorgesehen ist, an dem die Kolbenstange (11) des Antriebsorgans zur Bewegung des Gestänges (9;109) angreift.

2. Cabriolet-Fahrzeug nach Anspruch 1, **dadurch gekennzeichnet, daß** das Antriebsorgan (7) im wesentlichen horizontal in der Karosserie gehalten ist.

3. Cabriolet-Fahrzeug nach Anspruch 1 oder 2, **dadurch gekennzeichnet, daß** das Antriebsorgan (7) einen Hydraulikzylinder ausbildet, dessen Kolbenstange (11) in Fahrzeuglängsrichtung ein- und ausfahrbar ist.

4. Cabriolet-Fahrzeug nach einem der Ansprüche 1 bis 3, **dadurch gekennzeichnet, daß** das Gestänge (9;109) zumindest ein Zwischengelenk (10;110) aufweist, das durch die Kraft des Antriebsorgans (7) zwangsweise ein- oder ausfaltbar ist.

5. Cabriolet-Fahrzeug nach einem der Ansprüche 1 bis 4, **dadurch gekennzeichnet, daß** das Gestänge (9;109) in geschlossener Stellung des Verdeckkastendekkels (2) in eingefalteter Stellung und im wesentlichen parallel zu der Lage des Antriebsorgans (7) gehalten ist, wobei die Längserstreckung der Gestängeteile (15,16;115,116) im wesentlichen der Längserstreckung des Antriebsorgans (7) entspricht.

6. Cabriolet-Fahrzeug nach einem der Ansprüche 1 bis 5, **dadurch gekennzeichnet, daß** das Lager (12;112) sowie ein Anlenkpunkt (8a), an dem das Gestänge (9;109) an dem Verdeckkastendeckel (2) angreift, als Kugelgelenke ausgebildet sind.

## Claims

1. A convertible vehicle (1) with a foldable top storable underneath a cover panel (2) of a foldable top compartment, wherein the cover panel (2) of the foldable top compartment, when open, forms an acute angle (α) with the direction of travel (F), and wherein at least one drive mechanism supported fixedly on the body and exhibiting a retractable and extendible piston rod is provided for supporting the opening movement, which mechanism bears, via the piston rod, against the foldable top compartment cover panel, by means of rods (9; 109), outside a swivel bearing (5), preferably in a region (8) of the foldable top compartment cover panel (2) arranged in front of the bearing in the direction of travel, **characterised in that** the drive mechanism (7) is retained during a retracting and extending movement of the piston rod in essentially the same position on the vehicle body, the rods (9; 109) are supported on a bearing (12; 112) secured to the body for transmitting the force of the drive mechanism (7), and a lever arm (H) is provided starting from this bearing (12; 112), against which arm bears the piston rod (11) of the drive mechanism for moving the rods (9; 109).

2. The convertible vehicle according to claim 1, **characterised in that** the drive mechanism (7) is retained essentially horizontally in the body.

3. The convertible vehicle according to claim 1 or 2, **characterised in that** the drive mechanism (7) forms a hydraulic cylinder whose piston rod (11) is retractable and extendible in the longitudinal direction of the vehicle,

4. The convertible vehicle according to one of claims 1 to 3. **characterised in that** the rods (9; 109) exhibit at least one intermediate joint (10; 110) which can be compelled to fold in or out by the force of the drive mechanism (7).

5. The convertible vehicle according to one of claims 1 to 4, **characterised in that** the rods (9; 109), in the closed position of the foldable top compartment cover panel (2), is retained In the folded-in position and essentially parallel with the position of the drive mechanism (7), wherein the longitudinal extension of the rod parts (15, 16; 115, 116) corresponds essentially to the longitudinal extension of the drive mechanism (7).

6. The convertible vehicle according to one of claims 1 to 5, **characterised in that** the bearing (12; 112) and an articulation point (8a), against which bear the rods (9; 109) on the foldable top compartment cover panel (2), are designed as ball and socket joints.

## Revendications

1. Véhicule convertible (1) comportant un toit pliant escamotable en dessous d'un couvercle de compartiment de stockage pour toit (2), moyennant quoi le couvercle de compartiment de stockage pour toit (2), lors de l'ouverture, forme un angle aigu (α) avec le sens de déplacement (F) et, afin d'assister le mouvement d'ouverture, il est prévu au moins un organe d'entraînement soutenu de manière fixe sur la carrosserie, présentant une tige de piston, pouvant être déployée et rétractée, lequel organe d'entraînement, par l'intermédiaire de la tige de piston, est appliqué sur le couvercle de compartiment de stockage pour toit à l'extérieur d'un palier de pivotement (5), de préférence dans une zone (8) disposée en amont de , celui-ci, dans le sens de déplacement, du compartiment de stockage pour toit (2) par l'intermédiaire d'une tringlerie (9 ; 109), **caractérisé en ce que** l'organe d'entraînement (7), pendant le mouvement de déploiement et de rétractation de la tige de piston, est maintenu dans une position sensiblement identique sur la carrosserie du véhicule, et la tringlerie (9 ; 109) est soutenue sur un palier fixe par rapport à la carrosserie (12 ; 112) afin de transmettre la force de l'organe d'entraînement (7) et, à partir de ce palier (12 ; 112), s'étend un bras de levier (H), sur lequel est appliquée la tige de piston (11) de l'organe d'entraînement afin de déplacer la tringlerie (9 ; 109).

2. Véhicule convertible selon la revendication 1, **caractérisé en ce que** l'organe d'entraînement (7) est maintenu sensiblement horizontalement dans la carrosserie.

3. Véhicule convertible selon la revendication 1 ou 2, **caractérisé en ce que** l'organe d'entraînement (7) forme un vérin hydraulique, dont la tige de piston (11) peut se déployer et se rétracter dans la direction longitudinale du véhicule.

4. Véhicule convertible selon l'une quelconque des revendications 1 à 3, **caractérisé en ce que** la tringlerie (9 ; 109) présente au moins une articulation intermédiaire (10 ; 110), qui peut automatiquement être déployée ou rétractée sous l'effet de la force exercée par l'organe d'entraînement (7).

5. Véhicule convertible selon l'une quelconque des revendications 1 à 4, **caractérisé en ce que** la tringlerie (9 ; 109), dans la position fermée du couvercle de compartiment de stockage pour toit (2), est maintenue en position pliée et sensiblement parallèle par rapport à la position de l'organe d'entraînement (7), moyennant quoi l'étendue longitudinale des éléments de tringlerie (15, 16 ; 115, 116) correspond sensiblement à l'étendue longitudinale de l'organe d'entraînement (7).

6. Véhicule convertible selon l'une quelconque des revendications 1 à 5, **caractérisé en ce que** le palier (12; 112) ainsi qu'un point d'articulation (8a), sur lequel est appliquée la tringlerie (9; 109) sur le compartiment de stockage pour le toit (2), sont configurés sous la forme de joints à rotule.
